# EUROPEAN PATENT APPLICATION

(11) **EP 4 542 747 A1**
(43) Date of publication of application: **23.04.2025**
(21) Application number: 22946543.0
(22) Date of filing: 25.10.2022
(51) Int. Cl.: H01M 50/289, H01M 50/244, H01M 50/30, H01M 50/35, H01M 50/213

(54) **BATTERY PACK**

(30) Priority: 17.06.2022 CN 202210691718; 17.06.2022 CN 202221526034 U
(71) Applicant: Eve Power Co., Ltd., Jingmen, Hubei 448000 (CN)
(72) Inventor: QIU, Wencong, Jingmen, Hubei 448000 (CN); LI, Fan, Jingmen, Hubei 448000 (CN); CHEN, Zhiwei, Jingmen, Hubei 448000 (CN); CHEN, Zhaohai, Jingmen, Hubei 448000 (CN)
(74) Representative: HGF
(86) International application number: PCT/CN2022/127211
(87) International publication number: WO 2023/240872

(57) **Abstract**

Provided is a battery pack. The battery pack includes multiple battery cells, a casing, and multiple battery modules. A support beam is disposed in the casing. The support beam divides the interior space of the casing into multiple compartments. A connecting channel is formed between the bottom of the support beam and the inner bottom face of the casing. The connecting channel connects two adjacent compartments. Each battery module is disposed in a corresponding compartment.

## Description

This application claims priority to Chinese Patent Application No. 202221526034.0 filed with the CNIPA on Jun. 17, 2022, the disclosure of which is incorporated herein by reference in its entirety.

### TECHNICAL FIELD

The present application relates to the field of battery technology, for example, a battery pack.

### BACKGROUND

With the continuous development of high-tech industries, the application of power batteries is becoming increasingly widespread. The safety performance of power batteries is one of the key concerns for users. For lithium-ion batteries, thermal runaway of a battery cell is the most severe safety incident. There are many causes of thermal runaway, such as short circuits caused by internal defects in the battery or excessive heat accumulation in the battery caused by external short circuits.

If the high-temperature gas generated by thermal runaway cannot be released in time, it can easily cause the battery to catch fire or even explode. Therefore, how to prevent the high-temperature gas generated by thermal runaway of a battery cell from causing a fire or explosion is a key issue to consider in battery structure design. In related technologies, pressure relief is typically achieved by setting a guide channel at the bottom of the casing and a pressure relief valve on the lateral wall of the casing. The high-temperature gas can flow towards the pressure relief valve along the guide channel, but since the guide channel limits the diffusion range of the high-temperature gas, the accumulated gas in the pressure relief channel can easily cause local temperature inside the casing to rise too high, resulting in poor pressure relief and cooling effects.

### SUMMARY

The present application provides a battery pack. When thermal runaway occurs in a battery cell of the battery pack, the high-temperature gas can promptly diffuse, thereby offering a higher safety performance.

An embodiment of the present application provides a battery pack. The battery pack includes multiple battery cells, a casing, and at least two battery modules.

A support beam is disposed in the casing. The support beam divides the interior space of the casing into multiple compartments. A connecting channel is formed between the bottom of the support beam and the inner bottom face of the casing. The connecting channel connects two adjacent compartments.

Each battery module is disposed in a corresponding compartment.

In an embodiment, cushions are disposed on the inner bottom face of the casing, and the support beam is disposed on corresponding cushions to form the connecting channel.

In an embodiment, a pressure relief port is disposed on a lateral wall of the casing.

In an embodiment, an edge beam is disposed on an outer lateral wall of the casing, the edge beam has a pressure relief channel having two ends connecting each other, and the pressure relief port communicates with the pressure relief channel, the battery pack is configured to allow high-temperature gas generated by thermal runaway of any of the plurality of battery cells to sequentially pass through a corresponding compartment, the pressure relief port, and the pressure relief channel, and be released to an exterior of the casing.

In an embodiment, an electrical compartment is disposed in the casing, the battery pack also includes a maintenance cover, the maintenance cover covers the electrical compartment, and the maintenance cover is connected to the casing.

In an embodiment, each battery module includes a tray, at least one battery cell is disposed on the tray, and pressure relief holes are disposed at the bottom of the tray, the battery pack is configured to allow high-temperature gas generated by thermal runaway of any of the plurality of battery cells to pass through a respective pressure relief hole, and be released to an exterior of the casing.

In an embodiment, a support is disposed on the tray, the at least one battery cell is placed on the support, and through holes are formed in the support, the battery pack is configured to allow high-temperature gas generated by thermal runaway of any of the plurality of battery cells to sequentially pass through a corresponding through hole and a corresponding pressure relief hole, and be released to an exterior of the casing.

In an embodiment, each battery module also includes a structural adhesive, adhesive overflow holes are formed in the support, the adhesive overflow holes face gaps between adjacent battery cells, an adhesive filling space is formed between the tray and the support, and the structural adhesive is configured to fill the gaps, the adhesive overflow holes, and the adhesive filling space.

In an embodiment, ribs are disposed on the support, the ribs face the tray, and the ribs are configured to increase the contact area between the structural adhesive and the support.

In an embodiment, positioning portions are disposed on the support, the bottom face of the support has placement portions, each positioning portion and a corresponding placement portion form a positioning groove, each through hole is disposed at the bottom of a corresponding placement portion, and each battery cell is disposed in a corresponding positioning groove.

In an embodiment, annular ribs are disposed at bottoms of the placement portions, the annular ribs are in contact with the tray, and two ends of each annular rib communicate with a corresponding through hole and a corresponding pressure relief hole respectively.

In an embodiment, the positioning portions include each of positioning blocks, and the positioning blocks are spaced apart in a peripheral direction of the each positioning block of the plurality of positioning portions.

In an embodiment, a lateral face of each positioning block has a groove.

In an embodiment, the thickness of the top of the each positioning block is less than the thickness of the bottom of a same positioning block.

In an embodiment, each battery module includes a securing frame, the securing frame is disposed on the top of at least one battery cell, positioning protrusions are disposed on the securing frame, and each positioning protrusion extends into a gap between two adjacent battery cells and is in contact with the two adjacent battery cells.

In an embodiment, each battery module also includes a busbar, the securing frame also has mounting holes, the busbar is embedded in the mounting holes, and the busbar is in contact with and electrically connected to at least one battery cell.

In an embodiment, the busbar includes positive connection portions and negative connection portions, the mounting holes include positive mounting holes and negative mounting holes, each positive connection portion passes through a corresponding positive mounting hole and is electrically connected to the positive electrode of a corresponding battery cell, and each negative connection portion passes through a corresponding negative mounting hole and is electrically connected to the negative electrode of a corresponding battery cell.

In an embodiment, the busbar has positioning holes, positioning columns are disposed on the securing frame, and each positioning column passes through a corresponding positioning hole.

In an embodiment, each battery module also includes a thermal adhesive, and the thermal adhesive is disposed on an end face of the securing frame and an end face of the busbar and is configured to bond the securing frame to the busbar.

In an embodiment, the securing frame has mounting grooves, the busbar is disposed in the mounting grooves, each mounting hole is formed at the bottom of a corresponding mounting groove, adhesive storage grooves are formed between edges of the busbar and bottoms of the mounting holes and lateral walls of the mounting holes, and the adhesive storage grooves are configured to accommodate the thermal adhesive.

In an embodiment, adhesive passing holes are formed on the securing frame, the adhesive passing holes are located at the top of the at least one battery cell, and the thermal adhesive is configured to fill the adhesive passing holes and contact the top of the at least one battery cell.

The present application has the beneficial effects below.

In the battery pack of the present application, the support beam divides the interior space of the casing into multiple compartments, and the battery modules are placed in these compartments. Since there is a connecting channel between the bottom of the support beam and the inner bottom surface of the casing, adjacent compartments communicate with each other. When thermal runaway occurs in a battery cell of a battery module, the high-temperature gas generated can diffuse to other compartments through the connecting channel, thereby preventing heat concentration, serving a cooling function, effectively reducing a risk such as explosion, and enhancing the safety performance of the battery pack.

### BRIEF DESCRIPTION OF DRAWINGS

FIG. 1 is view one illustrating the structure of a casing according to an embodiment of the present application.
FIG. 2 is view two illustrating the structure of a casing according to an embodiment of the present application.
FIG. 3 is an exploded view of a battery pack according to an embodiment of the present application.
FIG. 4 is an exploded view of a battery module according to an embodiment of the present application.
FIG. 5 is view one illustrating the structure of a support according to an embodiment of the present application.
FIG. 6 is view two illustrating the structure of a support according to an embodiment of the present application.
FIG. 7 is a view illustrating the structure of a securing frame according to an embodiment of the present application.
FIG. 8 is a view illustrating an assembly of a busbar and a securing frame according to an embodiment of the present application.

### Reference list

10. battery cell; 100. casing; 110. support beam; 120. lateral beam; 130. cushion; 140. pressure relief port; 150. edge beam; 151. pressure relief channel; 160. maintenance cover; 170. liquid cooling cover; 171. coolant channel; 180. sealing strip; 190. press strip; 200. battery module; 210. tray; 211. pressure relief hole; 220. support; 221. through hole; 222. adhesive overflow hole; 223. rib; 224. annular rib; 225. positioning block; 226. placement portion; 230. structural adhesive; 240. securing frame; 241. positioning protrusion; 242. positive mounting hole; 243. negative mounting hole; 244. positioning column; 245. adhesive passing hole; 250. busbar; 251. positive connection portion; 252. negative connection portion; 253. substrate; 260. thermal adhesive; 261. adhesive storage groove

### DETAILED DESCRIPTION

The present application is described below clearly and completely in conjunction with the drawings. The embodiments described below are part, not all, of embodiments of the present application. Based on the embodiments of the present application, all other embodiments obtained by those of ordinary skill in the art without creative work are within the scope of the present application.

In the description of the present application, it is to be noted that orientations or position relations indicated by terms such as "center", "upper", "lower", "left", "right", "vertical", "horizontal", "in", and "out" are based on the drawings. These orientations or position relations are intended to facilitate and simplify the description of the present application and not to indicate or imply that a device or element referred to must have such particular orientations or is configured or operated in such particular orientations. Additionally, terms such as "first" and "second" are used only for the purpose of description and are not to be construed as indicating or implying relative importance. Terms "first position" and "second position" are two different positions. Moreover, when a first feature is described as "on", "above" or "over" a second feature, the first feature is right on, above or over the second feature, the first feature is obliquely on, above or over the second feature, or the first feature is simply at a higher level than the second feature. When the first feature is described as being "under", "below" or "underneath" the second feature, the first feature is right under, below or underneath the second feature, the first feature is obliquely under, below or underneath the second feature, or the first feature is simply at a lower level than the second feature.

In the description of the present application, it is to be noted that unless otherwise expressly specified, the term "mounted", "connected to each other", or "connected" is to be construed in a broad sense as securely connected, detachably connected, or integrated; mechanically connected or electrically connected; directly connected to each other or indirectly connected to each other via an intermediary; or intraconnected between two components. For those of ordinary skill in the art, meanings of the preceding terms in the present application may be understood based on situations.

Embodiments of the present application are described in detail below. Examples of the embodiments described below are illustrated in the drawings, where the same or similar reference numerals throughout the drawings represent the same or similar elements or elements having the same or similar functions. The embodiments described below with reference to the drawings are illustrative and are intended to explain the present application.

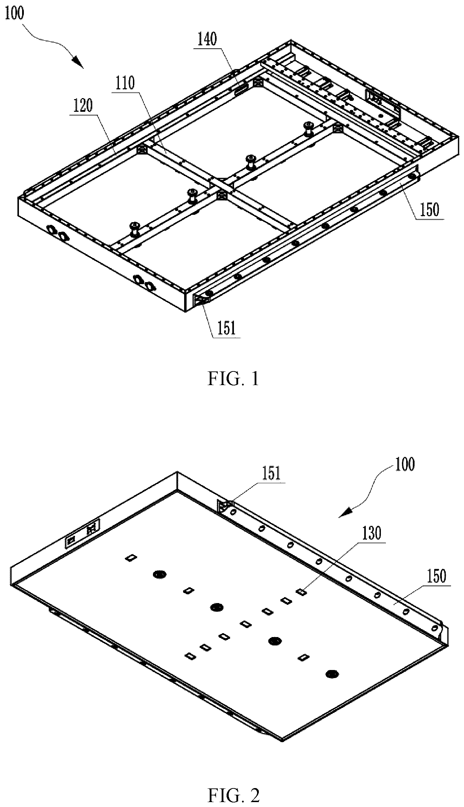

Referring to FIG. 1, an embodiment provides a battery pack. The battery pack includes multiple battery cells 10, a casing 100, and multiple battery modules 200. Support beams 110 are disposed in the casing 100. The support beams 110 divide the interior space of the casing 100 into multiple compartments. Connecting channels are formed between the bottoms of the support beams 110 and the inner bottom face of the casing 100. The connecting channels connect two adjacent compartments. Each battery module 200 is disposed in a corresponding compartment.

In the battery pack, the support beams 110 divide the interior space of the casing 100 into multiple compartments, and the battery modules are placed in these compartments. Since there are connecting channels between the bottoms of the support beams and the inner bottom surface of the casing, adjacent compartments communicate with each other. When thermal runaway occurs in a battery cell of a battery module 200, the high-temperature gas generated by the battery cell can diffuse to other compartments through the connecting channels, thereby preventing heat concentration, serving a cooling function, effectively reducing a risk such as explosion, and enhancing the safety performance of the battery pack.

Referring to FIG. 1, in this embodiment, the support beams 110 are cross-shaped, dividing the interior space of the casing 100 into four compartments for accommodating four battery modules 200. Lateral beams 120 are disposed at the inner edges of the casing 100. The end faces of the lateral beams 120 are flush with the end faces of the support beams 110, allowing the lateral beams 120 and the support beams 110 to support the battery modules 200. The support beams 110 include a horizontal beam and a vertical beam. The horizontal beam is disposed along the central axis in the width direction of the casing 100. The vertical beam is disposed along the central axis in the length direction of the casing 100. The vertical beam is interrupted in the middle and connected to the horizontal beam.

Referring to FIG. 2, cushions 130 are disposed on the inner bottom face of the casing 100, and the support beams 110 are disposed on the cushions 130. The cushions 130 make gaps formed between the support beams 110 and the inner bottom face of the casing 100, thereby forming connecting channels that connect adjacent compartments. In this embodiment, the cushions 130 are spaced apart, and the number of the cushions 130 and the positions of the cushions 130 are determined by the arrangement of the support beams 110. In other embodiments, through holes 221 may be formed in the support beams 110 to connect adjacent compartments. Optionally, the support beams 110 are connected to the cushions 130 by welding, bonding, or other connecting methods. Optionally, the bottom plate of the casing 100 is connected to the lateral walls of the casing 100 by full welding to ensure the structural strength.

By way of example, pressure relief ports 140 are formed on the lateral walls of the casing 100 and configured to release high-temperature gas. By way of example, edge beams 150 are disposed on the outer lateral walls of the casing 100, each edge beam 150 has a pressure relief channel 151 having two ends connecting each other, and each pressure relief port 140 communicates with a corresponding pressure relief channel 151, allowing high-temperature gas generated by thermal runaway of a battery cell 10 to pass through a corresponding compartment, a corresponding pressure relief port 140, and a corresponding pressure relief channel 151 in sequence and then be released to the exterior of the casing 100. In this embodiment, each edge beam 150 is located on an outer lateral wall of the casing 100 along the length direction of the casing 100. Due to the considerable length of the edge beam 150, the temperature of the high-temperature gas decreases as the high-temperature gas flows through a pressure relief channel 151, thereby reducing the risk of explosion or fire in the battery pack.

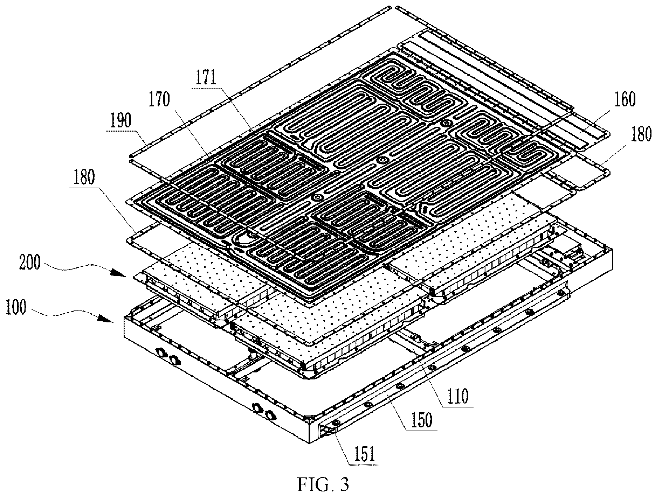

Referring to FIG. 3, an electrical compartment is disposed in the casing 100, the battery pack also includes a maintenance cover 160, the maintenance cover 160 covers the electrical compartment, and the maintenance cover is connected to the casing 100. To ensure the sealing performance of the electrical compartment, a sealing strip 180 may be disposed between the maintenance cover 160 and the casing 100. During the use of the battery pack, electrical components are more prone to problems compared to the battery modules 200. Therefore, the electrical compartment is covered by the maintenance cover 160 separately. In the event of a failure of an electrical component, it is all right to simply remove the maintenance cover 160, making repairs more convenient and less costly. The battery pack also includes liquid cooling covers 170. The liquid cooling covers 170 cover the compartments. The liquid cooling covers 170 are connected to the casing 100. Each liquid cooling cover 170 can encapsulate a corresponding battery module 200 in a corresponding compartment. Optionally, it is feasible to enhance the connection strength by adding a press strip 190. Optionally, each liquid cooling cover 170 is provided with a coolant channel 171. A coolant is placed in the coolant channel 171 to cool a corresponding battery module 200. With this structural arrangement, a liquid cooling plate and a casing cover in a related battery structure are integrated into a single unit, reducing the number of components, lowering the overall costs, enhancing the assembly efficiency, and resulting in a more compact overall structure.

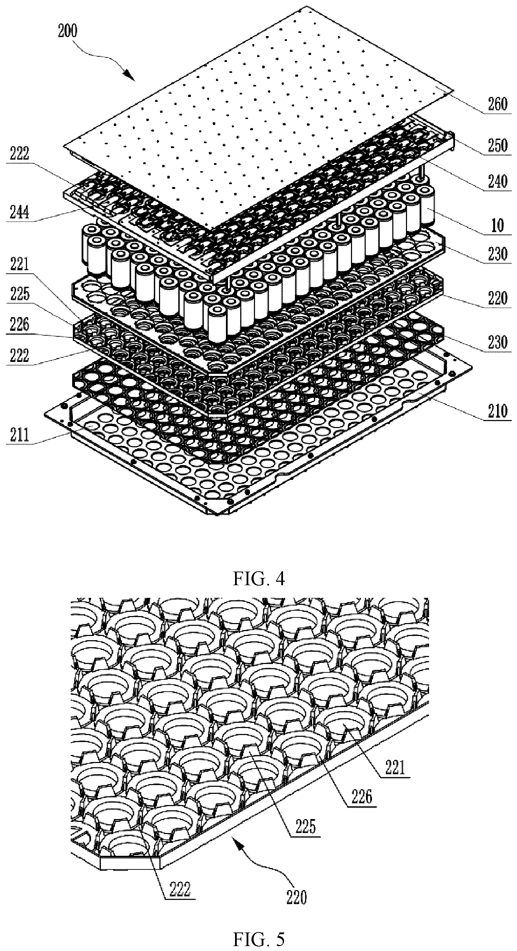

By way of example, referring to FIG. 4, each battery module 200 includes a tray 210, battery cells 10 are disposed on the tray 210, and pressure relief holes 211 are disposed at the bottom of the tray 210, allowing high-temperature gas generated by thermal runaway of a battery cell 10 to pass through a corresponding pressure relief hole 211 and then be released to other compartments. The tray 210 is made of metal, possessing a sufficient structural strength. The tray 210 includes a bottom plate and lateral plates perpendicularly connected to the bottom plate. The pressure relief holes 211 are disposed on the bottom plate. Each pressure relief hole 211 faces a corresponding battery cell 10 to rapidly release high-temperature gas. By way of example, the edges of the lateral plates have flanges. During the assembly of the battery module 200 and the casing 100, the flanges are placed over the support beams 110 or the lateral beams 120 and are secured to the casing 100 by screws.

By way of example, a support 220 is disposed on the tray 210, the battery cells 10 are placed on the support 220, and through holes 221 are formed in the support 220, allowing high-temperature gas generated by thermal runaway of a battery cell 10 to pass through a corresponding through hole 221 and a corresponding pressure relief hole 211 in sequence and then be released to other compartments. In this embodiment, the through holes 221 face the pressure relief holes 211 one to one, and the through holes 221 face the battery cells 10 one to one. The support 220 is made of plastic or other well-insulating materials to electrically isolate the battery cells 10 from the tray 210 to prevent short circuits between them.

Each battery module 200 also includes a structural adhesive 230. Adhesive overflow holes 222 are formed in the support 220. The adhesive overflow holes 222 face gaps between adjacent battery cells 10. An adhesive filling space is formed between the tray 210 and the support 220. The structural adhesive 230 is configured to fill the gaps, the adhesive overflow holes 222, and the adhesive filling space, thereby bonding the battery cells 10, the support 220, and the tray 210. The structural adhesive 230 can have functions of insulation as well as securing, preventing short circuits caused by contact between adjacent battery cells 10.

Referring to FIGS. 4 and 5, by way of example, positioning portions are disposed on the support 220, the bottom face of the support 220 has placement portions 226, each positioning portion and a corresponding placement portion 226 form a positioning groove, each through hole 221 is disposed at the bottom of a corresponding placement portion 226, and each battery cell 10 is disposed in a corresponding positioning groove. In this embodiment, each battery cell 10 is cylindrical and each through hole 221 is circular; therefore, each placement portion 226 is annular and each positioning portion is disposed at the outer edge of a corresponding placement portion 226. After the placement portions 226 are stitched together, their tangent areas are connected while their unconnected areas form the adhesive overflow holes 222. In this embodiment, each adhesive overflow hole 222 is approximately triangular in shape, depending on the gap between adjacent battery cells 10, and each through hole 221 is circular, depending on the shape of a corresponding battery cell 10. In other embodiments, the shape of each overflow hole 222 and the shape of each through hole 221 are determined according to the actual situation.

By way of example, the positioning portions include positioning blocks 225 spaced apart from each other. Each positioning block 225 has two curved surfaces that face two battery cells 10 one to one. In other embodiments, each positioning portion may be a cylindrical structure disposed at the outer edge of a corresponding placement portion 226 and extending towards the top of a corresponding battery cell 10 or may be a curved plate around a corresponding placement portion 226 as long as the positioning portion can position a corresponding battery cell 10.

By way of example, each positioning block 225 is disposed at the junction between adjacent placement portions 226. In this embodiment, each placement portion 226 in the middle of the support 220 is surrounded by and connected to six other placement portions 226 and thus is surrounded by six positioning blocks 225. In other embodiments, the number of positioning blocks 225 may be three, five, or another number, and the positions the positioning blocks 225 may be arranged based on the actual arrangement of the battery cells 10.

Optionally, for each positioning block 225, the thickness of the top of the positioning block 225 is less than the thickness of the bottom of the positioning block 225, and the width of the top of the positioning block 225 is less than the width of the bottom of the positioning block 225. For the battery module 200 in which the structural adhesive 230 fills the bottom of each battery cell 10, each positioning block 225 is a structure that is thinner and narrower at the top of the positioning block 225 and thicker and wider at the bottom of the positioning block 225, thereby increasing the contact area between the structural adhesive 230 and each positioning block 225 and the contact area between the structural adhesive 230 and each battery cell 10. This enhances the bonding strength of these components, makes each battery cell 10 and the support 220 less likely to become loose, facilitates demolding of the support 220, and alleviates the difficulty in manufacturing. Optionally, a lateral face of each positioning block 225 has a groove that can accommodate the structural adhesive 230. In this embodiment, two lateral faces of each positioning block 225 each has a V-shaped groove, thereby increasing the creepage distance to ensure the electrical safety as well as increasing the adhesive area to improve the group strength. To increase the adhesive area, in this embodiment, the circular area formed by the bottoms of positioning blocks 225 is slightly greater than the bottom of a corresponding battery cell 10. The diameter difference between the two is in the range of 0.1-0.4 mm, for example, 0.1 mm, 0.2 mm, 0.3 mm, or 0.4 mm. In other embodiments, the bottom of each positioning portion may be in contact with the bottom of a corresponding battery cell 10 to secure the battery cell 10 in the positioning portion.

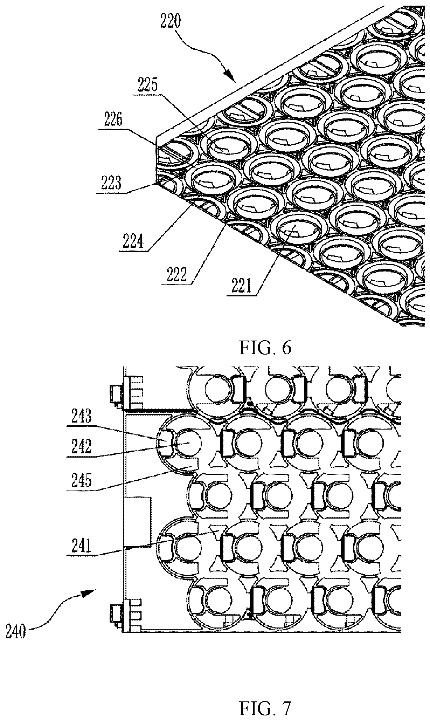

Referring to FIG. 6, ribs 223 are disposed on the support 220. The ribs 223 face the tray 210. This arrangement can increase the contact area between the structural adhesive 230 and the support 220, thereby enhancing the bonding strength. In this embodiment, each rib 223 is annular and is disposed around a corresponding placement portion 226 and concentric with a corresponding through hole 221. In other embodiments, each rib 223 is square, circular, curved, or in other shapes. Each rib 223 in such shapes is within the scope of the present application as long as the rib 223 can increase the bonding area between the structural adhesive 230 and the support 220.

Referring to FIG. 6, annular ribs 224 are disposed at bottoms of the placement portions 226, the annular ribs 224 are in contact with the tray 210, and two ends of each annular rib 224 communicate with a corresponding through hole 221 and a corresponding pressure relief hole 211 respectively. The annular ribs 224 provide support between the support 220 and the tray 210. Optionally, each annular rib 224 is disposed at the inner edge of a corresponding placement portion 226, creating gaps between adjacent annular ribs 224, and each annular rib 224 has a certain height. This arrangement allows for the formation of an adhesive filling space between the support 220 and the tray 210. The structural adhesive 230 can fill the adhesive filling space. Moreover, each pressure relief hole 211 communicates with a corresponding through hole 221 so that when a corresponding battery cell 10 experiences thermal runaway, the high-temperature gas generated by the battery cell 10 can rapidly exit through the through hole 221 and flow along a corresponding annular rib 224 to overflow from the pressure relief hole 211, thereby effectively preventing the high-temperature gas from spreading to the bottoms of other battery cells 10 and reducing the risk of thermal runaway of those battery cells.

Referring to FIG. 7, each battery module 200 includes a securing frame 240, the securing frame 240 is disposed on the top of at least one battery cell 10, positioning protrusions 241 are disposed on the securing frame 240, and each positioning protrusion 241 extends into a gap between two adjacent battery cells 10 and is in contact with the two adjacent battery cells 10. The positioning protrusions 241 are disposed on one side of the securing frame 240 and are inserted into the gaps between adjacent battery cells 10 when the securing frame 240 and the battery cells 10 are assembled. The shape of each positioning protrusion 241 is configured based on the gap between adjacent battery cells 10, allowing the positioning protrusion 241 to contact the lateral faces of the adjacent battery cells 10, thereby limiting the positions of the battery cells 10 and preventing short circuits caused by the contact between the battery cells 10.

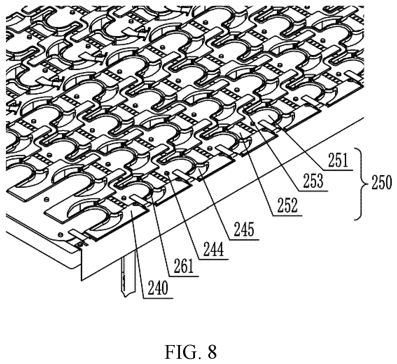

Referring to FIGS. 7 and 8, each battery module 200 also includes a busbar 250, the securing frame 240 also has mounting holes, the busbar 250 is embedded in the mounting holes, and the busbar 250 is in contact with and electrically connected to the at least one battery cell 10. The busbar 250 is embedded in the mounting holes, thereby enhancing the stability of the connection between the busbar 250 and the battery cells 10.

Referring to FIG. 8, the busbar 250 includes positive connection portions 251 and negative connection portions 252, the mounting holes include positive mounting holes 242 and negative mounting holes 243, each positive connection portion 251 passes through a corresponding positive mounting hole 242 and is electrically connected to the positive electrode of a corresponding battery cell 10, and each negative connection portion 252 passes through a corresponding negative mounting hole 243 and is electrically connected to the negative electrode of a corresponding battery cell 10. Optionally, the busbar 250 includes busbar units. Each busbar unit includes a positive connection portion 251 and a negative connection portion 252. The busbar units are connected by a substrate 253. Each positive mounting hole 242 is separate from a corresponding negative mounting hole 243 rather than being integrated with the corresponding negative mounting hole 243, thereby enhancing the reliability of connection to a corresponding battery cell 10, effectively preventing a short circuit in the battery cell 10 caused by misalignment of the busbar 250 or a poor contact with the battery cell 10, and increasing the structural strength of the support 240.

The busbar 250 has positioning holes, positioning columns 244 are disposed on the securing frame 240, and each positioning column 244 passes through a corresponding positioning hole, thereby securing the busbar 250 and preventing misalignment between the busbar 250 and a corresponding battery cell 250. In this embodiment, each busbar unit has a positioning hole. The positioning hole is located between the positive connection portion 251 and the negative connection portion 252. Each positioning column 244 is disposed between a corresponding positive mounting hole 242 and a corresponding negative mounting hole 243. The position and shape of each positioning hole should be configured according to a corresponding positioning column 244. In other embodiments, each positioning column 244 may be disposed on the substrate 253 or a corresponding positive connection portion 251, or a corresponding negative connection portion 252.

By way of example, each battery module 200 also includes a thermal adhesive 260, and the thermal adhesive 260 is disposed on an end face of the securing frame 240 and an end face of the busbar 250 and is configured to bond the securing frame 240 to the busbar 250. During the charging and discharging process of the battery, the busbar 250 may experience severe local heating. The thermal adhesive 260 can transfer the heat from the busbar 250 to cooler areas, thereby preventing local overheating in the battery and mitigating safety risks such as thermal runaway of any battery cell 10. Moreover, the thermal adhesive 260 can bond the busbar 250 to the support 220, thereby increasing the structural rigidity and stability.

The securing frame 240 has mounting grooves. The busbar is disposed in the mounting grooves. Each mounting hole is formed at the bottom of a corresponding mounting groove. Adhesive storage grooves are formed between edges of the busbar and bottoms of the mounting holes and lateral walls of the mounting holes. The adhesive storage grooves 261 are configured to accommodate the thermal adhesive. The cross-section area of each mounting groove is larger than the cross-section area of a corresponding portion of the busbar 250 so that after the busbar 250 is placed into the support 240, a gap surrounds this portion of the busbar 250. This gap serves as an adhesive storage groove 261. This structural design allows for accommodation of more thermal adhesive 260, thereby enhancing the heat transfer efficiency and the stability of the connection between components. Optionally, the height of each mounting groove is greater than the thickness of the busbar 250, allowing the thermal adhesive 260 to fill the surface of the busbar 250 and cover the busbar 250, thereby enhancing the heat transfer efficiency and increasing the connection strength between components.

By way of example, adhesive passing holes 245 are formed on the securing frame 240, the adhesive passing holes 245 are located at the top of the at least one battery cell 10, and the thermal adhesive 260 is configured to fill the adhesive passing holes 245 and contact the top of the at least one battery cell 10. Each adhesive passing hole 245 allows the thermal adhesive 260 to directly contact part of the top surface of a corresponding battery cell 10, facilitating the direct transfer of heat generated by the battery cell 10, rapidly reducing the temperature of the battery cell 10, and ensuring the safety of the battery cell 10. In this embodiment, the shape of each adhesive passing hole 245 may be configured according to the shape of the busbar 250 to cover a sufficiently large area on the premise that the support 220 has adequate structural strength. In other embodiments, each adhesive passing hole 245 may be, for example, circular, square, or waist-shaped.

## Claims

1. A battery pack, comprising:
a plurality of battery cells (10);
a casing (100), wherein a support beam (110) is disposed in the casing (100), the support beam (110) divides an interior space of the casing (100) into a plurality of compartments, a connecting channel is formed between a bottom of the support beam (110) and an inner bottom face of the casing (100), and the connecting channel connects two adjacent compartments of the plurality of compartments; and
at least two battery modules (200), wherein each battery module (200) of the at least two battery modules (200) is disposed in a corresponding compartment.

2. The battery pack of claim 1, wherein cushions (130) are disposed on the inner bottom face of the casing (100), and the support beam (110) is disposed on corresponding cushions (130) to form the connecting channel.

3. The battery pack of claim 1, wherein a pressure relief port (140) is disposed on a lateral wall of the casing (100).

4. The battery pack of claim 3, wherein an edge beam (150) is disposed on an outer lateral wall of the casing (100), the edge beam (150) has a pressure relief channel (151) having two ends connecting each other, and the pressure relief port (140) communicates with the pressure relief channel (151), the battery pack is configured to allow high-temperature gas generated by thermal runaway of any of the plurality of battery cells (10) to sequentially pass through a corresponding compartment, the pressure relief port (140), and the pressure relief channel (151), and be released to an exterior of the casing (100).

5. The battery pack of claim 1, wherein an electrical compartment is disposed in the casing (100), the battery pack further comprises a maintenance cover (160), the maintenance cover (160) covers the electrical compartment, and the maintenance cover (160) is connected to the casing (100).

6. The battery pack of any one of claims 1 to 5, wherein each battery module (200) of the at least two battery modules (200) comprises a tray (210), at least one battery cell (10) of the plurality of battery cells (10) is disposed on the tray (210), and pressure relief holes (211) are disposed at a bottom of the tray (210), the battery pack is configured to allow high-temperature gas generated by thermal runaway of any of the plurality of battery cells (10) to pass through a respective pressure relief hole (211), and be released to an exterior of the casing (100).

7. The battery pack of claim 6, wherein a support (220) is disposed on the tray (210), the at least one battery cell (10) is placed on the support (220), and through holes (221) are formed in the support (220), the battery pack is configured to allow high-temperature gas generated by thermal runaway of any of the plurality of battery cells (10) to sequentially pass through a corresponding through hole (221) and a corresponding pressure relief hole (211), and be released to an exterior of the casing (100).

8. The battery pack of claim 7, wherein each battery module (200) of the at least two battery modules (200) further comprises a structural adhesive (230), adhesive overflow holes (222) are formed in the support (220), the adhesive overflow holes (222) face gaps between adjacent battery cells (10) of the at least one battery cell (10), an adhesive filling space is formed between the tray (210) and the support (220), and the structural adhesive (230) is configured to fill the gaps, the adhesive overflow holes (222), and the adhesive filling space.

9. The battery pack of claim 8, wherein ribs (223) are disposed on the support (220), the ribs (223) face the tray (210), and the ribs (223) are configured to increase a contact area between the structural adhesive (230) and the support (220).

10. The battery pack of any one of claims 7 to 9, wherein a plurality of positioning portions are disposed on the support (220), a bottom face of the support (220) has a plurality of placement portions (226), each positioning portion of the plurality of positioning portions and a corresponding placement portion (226) form a positioning groove, each through hole (221) of the through holes (221) is disposed at a bottom of a corresponding placement portion (226), and each of the at least one battery cell (10) is disposed in a corresponding positioning groove.

11. The battery pack of claim 10, wherein annular ribs (224) are disposed at bottoms of the placement portions (226), the annular ribs (224) are in contact with the tray (210), and two ends of each annular rib (224) of the annular ribs (224) communicate with a corresponding through hole (221) and a corresponding pressure relief hole (211) respectively.

12. The battery pack of claim 11, wherein each of the plurality of positioning portions comprises a plurality of positioning blocks (225), and the plurality of positioning blocks (225) are spaced apart in a peripheral direction of the each positioning block (225) of the plurality of positioning portions.

13. The battery pack of claim 12, wherein a lateral face of the each positioning block (225) of the positioning blocks (225) has a groove.

14. The battery pack of claim 12 or 13, wherein a thickness of a top of the each positioning block (225) is less than a thickness of a bottom of a same positioning block (225).

15. The battery pack of claim 1, wherein each battery module (200) of the at least two battery modules (200) comprises a securing frame (240), the securing frame (240) is disposed on a top of at least one battery cell (10) of the plurality of battery cells (10), positioning protrusions (241) are disposed on the securing frame (240), and each positioning protrusion (241) of the positioning protrusions (241) extends into a gap between two adjacent battery cells (10) and is in contact with the two adjacent battery cells (10).

16. The battery pack of claim 15, wherein each battery module (200) of the at least two battery modules (200) further comprises a busbar (250), the securing frame (240) further has mounting holes, the busbar (250) is embedded in the mounting holes, and the busbar (250) is in contact with and electrically connected to at least one battery cell (10).

17. The battery pack of claim 16, wherein the busbar (250) comprises positive connection portions (251) and negative connection portions (252), the mounting holes comprise positive mounting holes (242) and negative mounting holes (243), each positive connection portion (251) of the positive connection portions (251) passes through a corresponding positive mounting hole (242) and is electrically connected to a positive electrode of a corresponding battery cell (10), and each negative connection portion (252) of the negative connection portions (252) passes through a corresponding negative mounting hole (243) and is electrically connected to a negative electrode of a corresponding battery cell (10).

18. The battery pack of claim 16 or 17, wherein the busbar (250) has positioning holes, positioning columns (244) are disposed on the securing frame (240), and each positioning column (244) of the positioning columns (244) passes through a corresponding positioning hole.

19. The battery pack of claim 16 or 17, wherein each battery module (200) of the at least two battery modules (200) further comprises a thermal adhesive (260), and the thermal adhesive (260) is disposed on an end face of the securing frame (240) and an end face of the busbar (250) and is configured to bond the securing frame (240) to the busbar (250).

20. The battery pack of claim 19, wherein the securing frame (240) has mounting grooves, the busbar (250) is disposed in the mounting grooves, each mounting hole of the mounting holes is formed at a bottom of a corresponding mounting groove, adhesive storage grooves (261) are formed between edges of the busbar (250) and bottoms of the mounting holes and lateral walls of the mounting holes, and the adhesive storage grooves (261) are configured to accommodate the thermal adhesive (260).

21. The battery pack of claim 19, wherein adhesive passing holes (245) are formed on the securing frame (240), the adhesive passing holes (245) are located at the top of the at least one battery cell (10), and the thermal adhesive (260) is configured to fill the adhesive passing holes (245) and contact the top of the at least one battery cell (10).
